# EUROPEAN PATENT APPLICATION

(11) **EP 4 765 243 A1**
(43) Date of publication of application: **24.06.2026**
(21) Application number: 25777361.4
(22) Date of filing: 26.03.2025
(51) Int. Cl.: H01M 4/36, H01M 4/525, H01M 4/505, H01M 10/052, H01M 4/02

(54) **POSITIVE ELECTRODE ACTIVE MATERIAL, METHOD FOR PREPARING SAME, AND POSITIVE ELECTRODE AND LITHIUM SECONDARY BATTERY COMPRISING SAME**

(30) Priority: 27.03.2024 KR 20240042136
(71) Applicant: LG Energy Solution, Ltd., Seoul 07335 (KR)
(72) Inventor: HEO, Jong Wook, Daejeon 34122 (KR); KIM, Ji Hye, Daejeon 34122 (KR); JUNG, Hae Jung, Daejeon 34122 (KR); PARK, Byung Chun, Daejeon 34122 (KR); LEE, Kyung Mee, Daejeon 34122 (KR); CHOI, Young Joo, Daejeon 34122 (KR); KOH, Yoon Young, Daejeon 34122 (KR)
(74) Representative: Hoffmann Eitle
(86) International application number: PCT/KR2025/003882
(87) International publication number: WO 2025/206748

(57) **Abstract**

A positive electrode active material according to the present invention is a positive electrode active material including a lithium nickel-based oxide particle in the form of a single particle which is composed of one single nodule, or a pseudo-single particle which is a composite of 30 or fewer nodules, and a coating layer formed on the surface of the lithium nickel-based oxide particle and including cobalt, wherein when the positive electrode active material is analyzed by X-ray photoelectron spectroscopy (XPS), XPS (Co/Ni), which is an atomic ratio of Co to Ni, is 0.15 or greater, when the positive electrode active material is analyzed by Auger electron spectroscopy (AES), AES (Co/Ni), which is a standard deviation of the atomic ratio of Co to Ni, is 0.80 or less, and the positive electrode active material has a content of residual Li₂CO₃ of 0.50 wt% or less.

## Description

### TECHNICAL FIELD

### Cross-reference to Related Applications

This application claims the benefit of Korean Patent Application No. 10-2024-0042136, filed on March 27, 2024, in the Korean Intellectual Property Office, the disclosure of which is incorporated herein in its entirety by reference.

### Technical Field

The present invention relates to a positive electrode active material in the form of a single particle and/or a pseudo-single particle, the positive electrode active material having excellent high-temperature lifespan properties and an effect of reducing gas generation, a preparation method thereof, and a positive electrode and a lithium secondary battery including the positive electrode active material.

### BACKGROUND ART

A lithium secondary battery is generally composed of a positive electrode, a negative electrode, a separator, and an electrolyte, and the positive electrode and the negative electrode include active materials capable of intercalation and deintercalation of lithium ions.

As a positive electrode active material of a lithium secondary battery, a lithium transition metal oxide is used, and among such lithium transition metal oxides, research and development has been more actively conducted on a lithium nickel-based oxide capable of easily implementing a high-capacity battery. However, a secondary particle form has a problem of intensifying crack generation inside the positive electrode active material during charging and discharging.

In order to solve the above-described problem, a technique for preparing a positive electrode active material in the form of a single particle rather than a secondary particle by increasing a firing temperature when preparing a lithium nickel cobalt manganese-based oxide has been proposed.

Particularly, when preparing a high-Ni positive electrode active material having an Ni molar ratio of 80 mol% or greater among all transition metals in the form of a single particle, due to a high firing temperature, the surface structure completeness of the positive electrode active material may be low, and the concentration of residual lithium may be high. In general, it is possible to improve surface structure completeness, and to decrease the concentration of residual lithium by means of a coating layer formed on the surface of a lithium nickel-based oxide particle.

However, if the coating layer formed on the surface of the lithium nickel-based oxide particle is not uniform, there has been a problem in that high-temperature lifespan properties are degraded, a gas generation amount increases, or the like when applied to a lithium secondary battery.

Therefore, there is a need for a technique capable of uniformly forming a coating layer on the surface of a lithium nickel-based oxide particle, thereby improving high-temperature lifespan properties and achieving an effect of reducing gas generation.

### DISCLOSURE OF THE INVENTION

### TECHNICAL PROBLEM

In order to solve the above-described problem, the present invention is to provide a positive electrode active material including a coating layer uniformly formed on the surface of a lithium nickel-based oxide and including cobalt, thereby being capable of improving high-temperature lifespan properties, and suppressing gas generation, a preparation method thereof, and a positive electrode and a lithium secondary battery including the positive electrode active material.

### TECHNICAL SOLUTION

[1] The present invention provides a positive electrode active material, which is a positive electrode active material including a lithium nickel-based oxide particle in the form of a single particle which is composed of one single nodule, or a pseudo-single particle which is a composite of 30 or fewer nodules, and a coating layer formed on the surface of the lithium nickel-based oxide particle and including cobalt, wherein when the positive electrode active material is analyzed by X-ray photoelectron spectroscopy (XPS), XPS (Co/Ni), which is an atomic ratio of Co to Ni, is 0.15 or greater, when the positive electrode active material is analyzed by Auger electron spectroscopy (AES), a standard deviation of AES (Co/Ni), which is an atomic ratio of Co to Ni, is 0.80 or less, and the positive electrode active material has a content of residual Li₂CO₃ of 0.50 wt% or less.
[2] In [1] above, the present invention provides a positive electrode active material, wherein the lithium nickel-based oxide particle has a nickel content of 55 mol% or greater among all metals excluding lithium.
[3] In [1] or [2] above, the present invention provides a positive electrode active material, wherein the positive electrode active material has a D₅₀ of 2.0 µm to 10.0 µm.
[4] In at least one of [1] to [3] above, the present invention provides a positive electrode active material, wherein the positive electrode active material has an average particle diameter of the nodules of 1 µm to 10 µm.
[5] In at least one of [1] to [4] above, the present invention provides a positive electrode active material, wherein the positive electrode active material has a BET specific surface area of 0.2 m²/g to 1.5 m²/g.
[6] In at least one of [1] to [5] above, the present invention provides a positive electrode active material, wherein the coating layer further includes one or more selected from the group consisting of Mg, Al, Ti, V, Cr, Mn, Zr, Nb, W, and B.
[7] In at least one of [1] to [6] above, the present invention provides a positive electrode active material, wherein the lithium nickel-based oxide has a composition represented by Formula 1 below.

   [Formula 1] LiₐNi_{b}Co_{c}M¹_{d}M²ₑO₂

   In Formula 1 above, M¹ is at least one selected from the group consisting of Mn and Al, M² is at least one selected from the group consisting of Ba, Ca, Zr, Ti, Mg, Ta, Nb, and Mo, and 1.0≤a≤1.5, 0.8≤b≤1.0, 0≤c≤0.2, 0≤d≤0.2, and 0≤e≤0.2.
[8] The present invention provides a method for preparing a positive electrode active material, the method including mixing a transition metal precursor including nickel, cobalt, and manganese with a lithium raw material and subjecting the mixture to primary firing to form a lithium nickel-based oxide in the form of a single particle which is composed of one single nodule, or a pseudo-single particle which is a composite of 30 or fewer nodules, and mixing the lithium nickel-based oxide with a cobalt compound and subjecting the mixture to secondary firing to form a positive electrode active material including a coating layer which includes cobalt, wherein the lithium nickel-based oxide formed by the primary firing includes Li₂CO₃ and LiOH, wherein a ratio of the content of LiOH to the content of Li₂CO₃ is 1.4 or greater, and the cobalt compound has a particle diameter of 1500 nm or less.
[9] In [8] above, the present invention provides a method for preparing a positive electrode active material, wherein the lithium nickel-based oxide formed by the primary firing has a sum of the content of LiOH and the content of Li₂CO₃ of 0.5 wt% to 2.2 wt%.
[10] In [8] or [9] above, the present invention provides a method for preparing a positive electrode active material, wherein a ratio of the content of the cobalt compound to the content of LiOH in the lithium nickel-based oxide formed by the primary firing is 2.00 mol%/wt% or greater.
[11] In at least one of [8] to [10] above, the present invention provides a method for preparing a positive electrode active material, wherein a ratio of the content of the cobalt compound to BET of the lithium nickel-based oxide formed by the primary firing is 2.5 wt%/(m²/g) or greater.
[12] In at least one of [8] to [11] above, the present invention provides a method for preparing a positive electrode active material, wherein the secondary firing is performed at a temperature of 660 °C to 740 °C.
[13] The present invention provides a positive electrode including the positive electrode active material according to any one of [1] to [7] above.
[14] The present invention provides a lithium secondary battery including the positive electrode according to [13] above.

### ADVANTAGEOUS EFFECTS

A positive electrode active material according to the present invention allows (1) XPS (Co/Ni), which is an atomic ratio of Co to Ni during XPS analysis, (2) a standard deviation of AES (Co/Ni), which is a ratio of the content of Co to the content of Ni during AES analysis, and (3) the content of residual Li₂CO₃ of the positive electrode active material, which has an effect of suppressing side reactions with an electrolyte solution, all three of which are capable of quantifying the uniformity and content of a coating layer formed on the surface of a lithium nickel-based oxide and including cobalt, to satisfy specific numerical ranges, and thus, may suppress degradation of the positive electrode active material during a charge/discharge process and high-temperature storage of a lithium secondary battery to implement high-temperature lifespan properties and an effect of reducing gas generation.

In a method for preparing a positive electrode active material according to the present invention, a lithium nickel-based oxide formed by primary firing includes Li₂CO₃ and LiOH, and the content of LiOH and the content of Li₂CO₃ after the primary firing, BET of the lithium nickel-based oxide after the primary firing, the content and size of a cobalt compound, and the temperature of secondary firing are controlled, so that the uniformity of a coating layer formed on the surface of a lithium nickel-based oxide and including cobalt is improved, thereby suppressing side reactions between the lithium nickel-based oxide and an electrolyte solution to implement high-temperature lifespan properties and an effect of reducing gas generation.

### BEST MDOE FOR CARRYING OUT THE INVENTION

The terms and words used in the present specification and its claims should not be construed in its ordinary or dictionary sense, but should be interpreted in a sense and concept consistent with the technical ideas of the present invention, based on the principle that an inventor may adequately define the concept of the terms in order to best describe his/her invention.

In the present invention, a "single particle" is a particle composed of one single nodule. In the present invention, a "pseudo-single particle" refers to a composite particle formed of 30 or fewer nodules.

In the present invention, a "nodule" refers to a sub-particle unit body constituting a single particle and a pseudo-single particle, wherein the nodule may be a single crystal with no crystalline grain boundary, or may be a polycrystal with no grain boundary in appearance when observed in a range of vision of 5,000 to 20,000 times using a scanning electron microscope (SEM). The average particle diameter of the nodules may be measured as an arithmetic average value of particle diameters of each nodule measured using a scanning electron microscope (SEM).

In the present invention, a "secondary particle" refers to a particle formed by aggregation of tens to hundreds, particularly, more than 30 sub-particle unit bodies. The sub-particle unit body constituting the secondary particle is referred to as a " primary particle" in order to distinguish the same from the nodule, which is the sub-particle unit body constituting the single particle and the pseudo-single particle.

The term "particle" used in the present invention may include any one or all of a single particle, a pseudo-single particle, a primary particle, a nodule, and a secondary particle.

In the present invention, "D₅₀" refers to a particle size based on 50% of a volume cumulative particle size distribution of positive electrode active material. The D₅₀ may be measured by a laser diffraction method. For example, the average particle diameter (D₅₀) may be measured by dispersing positive electrode active material powder in a dispersion medium, and then introducing the mixture into a commercially available laser diffraction particle size measurement device (e.g., Microtrac MT 3000) to be irradiated with an ultrasonic wave of about 28 kHz at an output of 60W, thereby obtaining a volume cumulative particle size distribution graph, and then obtaining a particle size corresponding to 50% of a volume cumulative amount.

In the present invention, a "specific surface area" is measured by a BET method, and specifically, may be calculated from the adsorption amount of nitrogen gas under a liquid nitrogen temperature (77K) using Belsorp-mino II of BEL Japan Co., Ltd.

In the present invention, the presence or absence and content of an element on the surface of the lithium nickel-based oxide may be confirmed by X-ray photoelectron spectroscopy (XPS) and Auger electron spectroscopy (AES) analysis.

Specifically, the X-ray photoelectron spectroscopy (XPS) may be performed using a Nexsa G2 ESCA system of Thermo Fisher Scientific Co., and the Auger electron spectroscopy (AES) may be performed using a PHI 710 device of ULVAC-PHI Co. Specifically, the presence or absence and content of an element for each depth in the positive electrode active material may be analyzed by means of the X-ray photoelectron spectroscopy (XPS), and the uniformity of the coating layer on the surface of the lithium nickel-based oxide may be analyzed by means of the Auger electron spectroscopy (AES).

A positive electrode active material, a method for preparing the positive electrode active material, a positive electrode, and/or a lithium secondary battery according to the present invention include at least one of configurations disclosed below, and may include any combination of technically possible configurations of the following configurations.

### Positive electrode active material

Hereinafter, a positive electrode active material according to the present invention will be described.

A positive electrode active material, which is a positive electrode active material including a lithium nickel-based oxide particle in the form of a single particle which is composed of one single nodule, or a pseudo-single particle which is a composite of 30 or fewer nodules, and a coating layer formed on the surface of the lithium nickel-based oxide particle and including cobalt, wherein when the positive electrode active material is analyzed by X-ray photoelectron spectroscopy (XPS), XPS (Co/Ni), which is an atomic ratio of Co to Ni, is 0.15 or greater, when the positive electrode active material is analyzed by Auger electron spectroscopy (AES), a standard deviation of AES (Co/Ni), which is an atomic ratio of Co to Ni, is 0.80 or less, and the positive electrode active material has a content of residual Li₂CO₃ of 0.50 wt% or less.

The lithium nickel-based oxide particle is in the form of a single particle which is composed of one single nodule, or a pseudo-single particle which is a composite of 30 or fewer nodules, preferably 2 to 20 nodules, and more preferably 2 to 10 nodules. The lithium nickel-based oxide in the form of a single particle and/or a pseudo-single particle has higher particle strength than a typical lithium nickel-based oxide in the form of a secondary particle in which tens to hundreds of primary particles are aggregated, so that there is less particle breakage during roll-pressing.

In addition, the lithium nickel-based oxide in the form of a single particle or a pseudo-single particle according to the present invention has a small number of sub-components (i.e., nodules) constituting a particle, so that there is less change caused by volume expansion and contraction of primary particles during charging and discharging, and accordingly, the occurrence of cracks inside the particle is significantly reduced.

The positive electrode active material according to the present invention may have a composition in which the content of nickel among all metals excluding lithium is 55 mol% or greater, preferably 80 mol% or greater, and more preferably 90 mol% or greater. An Ni-based positive electrode active material has high capacity since the content of nickel therein among transition metals constituting the positive electrode active material is higher than that of other transition metals, but has the limitation of structural instability due to unstable Ni³⁺ and Ni⁴⁺ ions present on the surface of the positive electrode active material. In order to resolve the structural instability described above, various techniques for modifying the surface of a positive electrode active material are being studied.

Particularly, when preparing a positive electrode active material having a nickel content of 80 mol% or greater among all metals excluding lithium, there have been problems in that due to a high firing temperature, the surface structure completeness of the positive electrode active material may be low, and the concentration of residual lithium may be high. In order to solve the above-described problems, it is possible to improve surface structure completeness, and to decrease the concentration of residual lithium by means of a coating layer formed on the surface of a lithium nickel-based oxide particle.

However, if the coating layer formed on the surface of the lithium nickel-based oxide particle is not uniform, there has been a problem in that high-temperature lifespan properties are degraded, a gas generation amount increases, or the like when applied to a lithium secondary battery.

Therefore, the inventors of the present invention have confirmed that if (1) XPS (Co/Ni), which is an atomic ratio of Co to Ni during XPS analysis, and (2) a standard deviation of AES (Co/Ni), which is a ratio of the content of Co to the content of Ni during AES analysis, satisfy specific numerical ranges to quantify the uniformity of a coating layer formed on the surface of a lithium nickel-based oxide particle, and if (3) the content of residual Li₂CO₃ of a positive electrode active material satisfies a specific numerical range to suppress side reactions between the lithium nickel-based oxide particle and an electrolyte solution, thereby reducing an amount of gas generation, there is an effect of improving high-temperature lifespan properties and reducing the amount of gas generation.

XPS (Co/Ni), which is the atomic ratio of Co to Ni during the XPS analysis, may be measured by confirming the presence or absence and content of Ni and Co in a region from the surface of the positive electrode active material to the coating layer formed on the surface of the lithium nickel-based oxide and including cobalt. During the XPS analysis, since it is easy to confirm the presence or absence and content of Ni and Co in the entire coating layer including cobalt included in the positive electrode active material particle, XPS (Co/Ni), which is the atomic ratio of Co to Ni during the XPS analysis, may serve as a parameter indicating the content of the coating layer including cobalt on the surface of the positive electrode active material.

XPS (Co/Ni), which is the atomic ratio of Co to Ni during the XPS analysis, may be 0.15 or greater, 0.15 to 0.30, 0.17 to 0.25, or 0.20 to 0.22. A positive electrode active material having the XPS (Co/Ni) of less than 0.15 indicates a low content of the coating layer including cobalt on the surface, and there may be a problem in that since it is not possible to properly protect the interface between an electrolyte solution and the positive electrode active material having a high nickel (High-Ni) composition, it is not possible to effectively suppress surface deterioration during high-temperature cycles and high-temperature storage. Therefore, if the XPS (Co/Ni) satisfies the above-described range, the content of the coating layer including cobalt on the surface of the positive electrode active material is sufficient, so that the coating layer may sufficiently protect the interface between the electrolyte solution and the positive electrode active material, and accordingly, high-temperature lifespan properties and high-temperature storage properties may be excellent. The standard deviation of AES (Co/Ni), which is the ratio of the content Co to the content of Ni during the AES analysis, may be a value obtained by selecting a plurality of measurement regions, specifically 15 or more, more specifically 15, on the surface of a positive electrode active material particle having the same particle diameter as the D₅₀ of positive electrode active material powder, and measuring a standard deviation of the ratio of content Co to the content of Ni by Auger electron spectroscopy (AES) measured in each of the plurality of measurement regions. In this case, the plurality of measurement regions may have a square shape, a circular shape, an oval shape, or the like, but are not limited thereto, as long as it is a localized region of the surface of the positive electrode active material particle. If the plurality of measurement regions have a square shape, the length of one side of the square may be 10% or less, 0.5% to 10%, 1% to 5%, or 1.5% to 4.5% of the D₅₀ of the positive electrode active material powder. If the above-described range is satisfied, the reliability of uniformity according to the standard deviation value of the AES (Co/Ni) may be excellent. The plurality of measurement regions may be spaced apart from each other by a distance of 15% or less, 5% to 13%, 8% to 12%, or 10% of the D₅₀ of the positive electrode active material powder. Alternatively, the plurality of measurement regions may be spaced apart from each other by a distance of 1 µm or less, 0.1 µm to 1 µm, 0.2 µm to 0.7 µm, 0.3 µm to 0.5 µm, or 0.4 µm of the D₅₀ of the positive electrode active material powder.

The standard deviation of AES (Co/Ni), which is the ratio of the content of Co to the content Ni during the AES analysis, may confirm the distribution of the ratio of the content of Co to the content Ni in a localized region rather than the entire surface of the positive electrode active material particle, and thus, may serve as a parameter indicating the uniformity of the coating layer including cobalt on the surface of the positive electrode active material.

The standard deviation of AES (Co/Ni), which is the ratio of the content of Co to the content Ni during the AES analysis, may be 0.8 or less, 0.5 or less, 0.2 to 0.5, or 0.25 to 0.35. A positive electrode active material having the standard deviation of AES (Co/Ni) of greater than 0.8 indicates that a coating layer including cobalt is not uniform, in this case, even if Co coating with the same content is applied, the Co coating is performed thin on a specific surface portion, so that there may be a problem in that since it is not possible to properly protect the interface between an electrolyte solution and the positive electrode active material having a high nickel (High-Ni) composition, it is not possible to effectively suppress surface deterioration during high-temperature cycles and high-temperature storage. Therefore, if the standard deviation of AES (Co/Ni), which is the ratio of the content of Co to the content Ni during the AES analysis, satisfies the above-described range, a coating layer including cobalt may be formed with the uniform thickness on the entire surface of the positive electrode active material, so that the interface between the electrolyte solution and the positive electrode active material may be uniformly protected, and accordingly, high-temperature lifespan properties and high-temperature storage properties may be excellent.

The content of residual Li₂CO₃ of the positive electrode active material may be 0.5 wt% or less, 0.4 wt% or less, or 0.01 wt% to 0.4 wt%. A positive electrode active material having the content of residual Li₂CO₃ of the positive electrode active material of greater than 0.5 wt% may have a problem in that side reactions between a lithium nickel-based oxide particle and an electrolyte solution increase excessively, thereby increasing gas generation, which may degrade the performance of a lithium secondary battery. Specifically, even if the XPS (Co/Ni) and the standard deviation of AES (Co/Ni) satisfy the above-described numerical ranges, if the content of residual Li₂CO₃ of the final positive electrode active material does not satisfy the above-described numerical range, the amount of gas generation is significantly increased compared to a case in which the content of residual Li₂CO₃ satisfies the above-described numerical range, which may degrade the performance of a lithium secondary battery. Therefore, if the content of residual Li₂CO₃ of the final positive electrode active material satisfies the above-described range, side reactions between the positive electrode active material and the electrolyte solution may be suppressed, so that it is possible to reduce gas generation.

The coating layer may include one or more selected from the group consisting of Mg, Al, Ti, V, Cr, Mn, Zr, Nb, W, and B, preferably Co and Al, and more preferably Co. Specifically, the positive electrode active material may include the coating layer in an amount of 0.18 wt% to 2.5 wt%, 0.5 wt% to 2.0 wt%, or 1.0 wt% to 1.8 wt%.

The positive electrode active material according to the present invention may have a D₅₀ of 2.0 µm to 10.0 µm, 3.0 µm to 7.0 µm, or 3.5 µm to 5.0 µm. If the D₅₀ of the positive electrode active material according to the present invention satisfies the above-described range, properties of high energy density and low initial resistance may be implemented. If the D₅₀ of the positive electrode active material is less than 2.0 µm, it is difficult to implement a high roll-pressing density, which may decrease an energy density, and if the D₅₀ is greater than 10.0 µm, the lithium mobility in the positive electrode active material decreases, which may increase the initial resistance of a lithium secondary battery including the positive electrode active material.

In the positive electrode active material according to the present invention, the average particle diameter of the nodules may be 1 µm to 10 µm, 2 µm to 6 µm, or 3 µm to 5 µm. If the average particle diameter of the nodules of the positive electrode active material according to the present invention satisfies the above-described range, properties of high energy density and low initial resistance may be implemented. If the average particle diameter of the nodules of the positive electrode active material according to the present invention is less than 1 µm, the total specific surface area of the positive electrode active material increases, which may increase side reactions with an electrolyte solution, and if the average particle diameter of the nodules is greater than 10 µm, lithium mobility decreases, which may degrade output properties of a battery.

The positive electrode active material according to the present invention may have a BET specific surface area of 0.2 m²/g to 1.5 m²/g, preferably 0.3 m²/g to 1.2 m²/g, 0.4 m²/g to 1.0 m²/g, or 0.4 m²/g to 0.8 m²/g. If the BET specific surface area of the positive electrode active material is less than 0.2 m²/g, there is a concern regarding initial output degradation, and if the BET specific surface area is greater than 1.5 m²/g, there are concerns regarding high-temperature lifespan, resistance increase rate, and storage gas. Therefore, if the BET specific surface area of the positive electrode active material satisfies the above-described numerical range, excellent performance in output performance and high-temperature durability may be implemented.

Specifically, the lithium nickel-based oxide may be a particle having a composition of Formula 1 below.

[Formula 1] LiₐNi_{b}Co_{c}M¹_{d}M²ₑO₂

In Formula 1 above, M¹ is Mn, Al, or a combination thereof, preferably Mn or a combination of Mn and Al, and M² is one or more selected from the group consisting of Ba, Ca, Zr, Ti, Mg, Ta, Nb, and Mo. An M² element is not necessarily included, but if included in an appropriate amount, the M² element may serve to promote particle growth during firing or improve crystal structure stability.

The a represents the molar ratio of lithium in the lithium nickel-based oxide, and may satisfy 1.0≤a≤1.5, 1.0≤a≤1.2, or 1.00≤a≤1.15. If the molar ratio of lithium satisfies the above-described range, a stable layered crystal structure may be formed.

The b represents the molar ratio of nickel among all metals excluding lithium in the lithium nickel-based oxide, and may satisfy 0.8≤b<1.0, 0.85≤b<1.0, or 0.90≤b<1. If the molar ratio of nickel satisfies the above-described range, excellent capacity properties may be exhibited, and particularly, if the molar ratio of nickel is 0.90 or greater, more excellent capacity properties may be implemented.

The c represents the molar ratio of cobalt among all metals excluding lithium in the lithium nickel-based oxide, and may satisfy 0≤c≤0.2, 0<c<0.2, or 0<c<0.18.

The d represents the molar ratio of M¹ among all metals excluding lithium in the lithium nickel-based oxide, and may satisfy 0≤d≤0.2, 0<d<0.2, or 0<d<0.18.

The e represents the molar ratio of an M² element among all metals excluding lithium in the lithium nickel-based oxide, and may satisfy 0≤e≤0.2, 0≤e≤0.15, or 0≤e≤0.1.

### Method for preparing positive electrode active material

Next, a method for preparing a positive electrode active material of the present invention will be described.

The method for preparing a positive electrode active material according to the present invention includes the steps of mixing a transition metal precursor including nickel, cobalt, and manganese with a lithium raw material and subjecting the mixture to primary firing to form a lithium nickel-based oxide in the form of a single particle which is composed of one single nodule, or a pseudo-single particle which is a composite of 30 or fewer nodules, and mixing the lithium nickel-based oxide with a cobalt compound and subjecting the mixture to secondary firing to form a positive electrode active material including a coating layer which includes cobalt. The lithium nickel-based oxide formed by the primary firing includes Li₂CO₃ and LiOH, wherein a ratio of the content of LiOH to the content of Li₂CO₃ is 1.4 or greater, and the cobalt compound has a particle diameter of 1500 nm or less.

Each step of the method for preparing a positive electrode active material will be described in detail.

### (Step of preparing transition metal precursor)

First, a transition metal precursor including nickel, cobalt, and manganese is mixed with a lithium raw material and the mixture is subjected to primary firing to form a lithium nickel-based oxide in the form of a single particle which is composed of one single nodule, or a pseudo-single particle which is a composite of 30 or fewer nodules.

In this case, the positive electrode active material precursor may be a commercially available precursor purchased and used, such as a nickel-cobalt-manganese-based hydroxide or the like, or may be prepared according to a precursor preparation method known in the art, such as coprecipitation.

For example, a transition metal-containing solution including cations of nickel (Ni), cobalt (Co), and M¹ is prepared, and then the transition metal-containing solution is added with an ammonium cation-containing complex forming agent and a basic aqueous solution to be subjected to a coprecipitation reaction to prepare a positive electrode active material precursor.

The transition metal-containing solution may include a nickel-containing raw material, a cobalt-containing raw material, and an M¹ -containing raw material, and the M¹ - containing raw material may be a manganese-containing raw material and/or an aluminum-containing raw material.

The nickel-containing raw material may be, for example, an acetate, a nitrate, a sulfate, a halide, a sulfide, a hydroxide, an oxide, an oxyhydroxide, or the like, which contains nickel, and may be, specifically, Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄ ·6H₂O, a fatty acid nickel salt, a nickel halide, or a combination thereof, but is not limited thereto.

The cobalt-containing raw material may be an acetate, a nitrate, a sulfate, a halide, a sulfide, a hydroxide, an oxide, or an oxyhydroxide, and the like, all containing cobalt, specifically Co(OH)₂, CoOOH, Co(OCOCH₃)₂·4H₂O, Co(NO₃)₂·6H₂O, CoSO₄, Co(SO₄)₂·7H₂O, or a combination thereof, but is not limited thereto.

The manganese-containing raw material may be, for example, an acetate, a nitrate, a sulfate, a halide, a sulfide, a hydroxide, an oxide, an oxyhydroxide, or a combination thereof, which contains manganese, and may be, specifically, a manganese oxide such as Mn₂O₃, MnO₂, and Mn₃O₄, a manganese salt such as MnCO₃, Mn(NO₃)₂, MnSO₄, manganese acetate, dicarboxylic acid manganese, citric acid manganese, and fatty acid manganese salt, manganese oxyhydroxide, manganese chloride, or a combination thereof, but is not limited thereto.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof.

The transition metal-containing solution may be prepared by adding the nickel-containing raw material, the cobalt-containing raw material, and the M¹-containing raw material to a solvent, specifically water, or to a mixed solvent of water and an organic solvent which can be uniformly mixed with water (for example, alcohol, etc.), or may be prepared by mixing an aqueous solution of the nickel-containing raw material, an aqueous solution of the cobalt-containing raw material, and an aqueous solution of the M¹-containing raw material.

The ammonium cation-containing complex forming agent may be, for example, NH₄OH, (NH₄)₂SO₄, NH₄NO₃, NH₄Cl, CH₃COONH₄, NH₄CO₃, or a combination thereof, but is not limited thereto. Meanwhile, the ammonium cation-containing complex forming agent may be used in the form of an aqueous solution, and at this time, water, or a mixture of an organic solvent (for example, an alcohol, etc.) which can be uniformly mixed with water and water may be used as a solvent.

The basic compound may be a hydroxide of an alkali metal or an alkaline earth metal, such as NaOH, KOH or Ca(OH)₂, a hydrate thereof, or a combination thereof. The basic compound may also be used in the form of an aqueous solution, and at this time, as a solvent, water, or a mixture of an organic solvent (for example, alcohol, etc.) which can be uniformly mixed with water and water may be used.

The basic compound is added to control the pH of a reaction solution, and may be added in an amount such that the pH of a metal solution is 8 to 12.

The coprecipitation reaction may be performed in an inert atmosphere, for example, in a nitrogen atmosphere, an argon atmosphere, or the like, at a temperature in the range of 35 °C to 80 °C.

By the above-described process, positive electrode active material precursor particles of a nickel-cobalt-M¹ hydroxide are produced, and precipitated in the reaction solution. By controlling the concentration of the nickel-containing raw material, the cobalt-containing raw material, and the M¹-containing raw material, a positive electrode active material precursor having a nickel (Ni) content of 55 mol% or greater in the total content of metals may be prepared. The precipitated positive electrode active material precursor particles are separated according to a typical method, and dried to prepare a positive electrode active material precursor.

Thereafter, the positive electrode active material precursor and a lithium raw material may be mixed.

The lithium raw material may be a sulfate, a nitrate, an acetate, a carbonate, an oxalate, a citrate, a halide, a hydroxide, an oxyhydroxide, or the like, which contains lithium, and is not particularly limited as long as it may be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or the like, and any one thereof or a mixture of two or more thereof may be used.

The positive electrode active material precursor and the lithium raw material may be mixed at a molar ratio of, for example, about 1: 1, about 1: 1.05, about 1: 1.10, about 1: 1.15, or about 1: 1.20, but are not limited thereto.

### (Primary firing)

Thereafter, the mixture may be subjected to primary firing to form a lithium nickel-based oxide in the form of a single particle which is composed of one single nodule, or a pseudo-single particle which is a composite of 30 or fewer nodules.

The primary firing may be performed under an air or oxygen atmosphere. The primary firing may be performed at a temperature of 600 °C to 1000 °C, 750 °C to 950 °C, or 800 °C to 900 °C. The primary firing may be performed for 4 hours to 12 hours, 6 hours to 12 hours, or 8 hours to 12 hours. If the primary firing and duration satisfy the above-described ranges, it is possible to form a lithium nickel-based oxide not in the form of a secondary particle, but in the form of a single particle which is composed of one single nodule, or a pseudo-single particle which is a composite of 30 or fewer nodules. In the case of a positive electrode active material in the form of a single particle or pseudo-single particle has a smaller contact area with an electrolyte solution compared to a typical positive electrode active material in the form of a secondary particle, and thus, has fewer side reactions with the electrolyte solution, and has excellent particle strength, so that there is less particle breakage when manufacturing an electrode. Therefore, when a positive electrode active material in the form of a single particle or pseudo-single particle is applied, there are advantages in terms of gas generation and lifespan properties.

The lithium nickel-based oxide formed by the primary firing includes Li₂CO₃ and LiOH, wherein the content of Li₂CO₃ after the primary firing may be 1.0 wt% or less, 0.7 wt% or less, or 0.3 wt% to 0.5 wt%, and the content of LiOH after the primary firing may be 1.2 wt% or less, 0.4 wt% to 1.2 wt%, or 0.6 wt% to 1.1 wt%. After the primary firing, the residual lithium reacts with a Co coating source to form an oxide series coating layer including Li and Co, and the content of Li₂CO₃ indicates the content of lithium in a form that has relatively low reactivity with the Co coating source, while the content of LiOH indicates the content of lithium in a form that has relatively high reactivity with the Co coating source. If necessary, the content of residual lithium after the primary firing may be controlled using an exhaust device of a firing furnace.

The ratio of the LiOH content to the Li₂CO₃ content may be 1.4 or greater, 1.4 to 2.5, or 1.7 to 2.0. Even if there is residual lithium of the same content, if the ratio of LiOH, which has high reactivity with the Co coating source, is relatively high, a coating layer with relatively higher uniformity may be formed even when Co coating of the same process is performed.

The lithium nickel-based oxide formed by the primary firing may have a sum of the content of LiOH and the content of Li₂CO₃ of 0.5 wt% to 2.2 wt%, 0.6 wt% to 2.0 wt%, or 0.7 wt% to 1.7 wt%. If the amount of residual lithium is excessively high, there is a high possibility that an excessive amount of residual lithium is present even after Co coating, which may lead to poor slurry stability when preparing a storage gas and electrodes, and if the amount of residual lithium is too low with respect to the Co coating source, it may be difficult to form a suitable Li-Co-O series coating layer, which may limit the implementation of effective improvement in high-temperature lifespan.

The BET specific surface area of the lithium nickel-based oxide formed by the primary firing may be 0.2 m²/g to 1.5 m²/g, 0.3 m²/g to 1.2 m²/g, or 0.4 m²/g to 0.8 m²/g. If the BET is too high with respect to the Co coating content, a coating forming layer may not cover the entire surface area of a positive electrode, which may limit the improvement in high-temperature lifespan and performance during high-temperature storage, and in an opposite case, an excessive coating layer may be formed with respect to the specific surface area, which may lead to poor initial resistance performance. The BET of the lithium nickel-based oxide may be controlled by a pulverization method such as a mechanical milling method, and a firing condition, if necessary.

### (Secondary firing)

Next, the lithium nickel-based oxide is mixed with a cobalt compound and the mixture is subjected to secondary firing to form a positive electrode active material including a coating layer which includes cobalt. Specifically, the surface of the lithium nickel-based oxide particle is coated by the cobalt compound.

During the secondary firing, lithium remaining on the surface of the lithium nickel-based oxide may react with cobalt of the coating material, thereby producing a lithium cobalt oxide. If the residual lithium is removed as a result of the formation of the coating layer, a washing process for removing the residual lithium may be omitted, which may simplify the process. In addition, in general, during a process of performing the washing process, the oxidation number of Ni on the surface of the positive electrode active material particles changes to electrically inactive Ni⁺², which tends to increase resistance, but if the washing process is omitted, the change in the oxidation number of Ni may be minimized, so that it is possible to achieve an effect of suppressing the increase in resistance.

The cobalt compound may be an acetate, a nitrate, a sulfate, a halide, a sulfide, a hydroxide, an oxide, or an oxyhydroxide, and the like, all containing cobalt, specifically Co(OH)₂, CoOOH, Co(OCOCH₃)₂·4H₂O, Co(NO₃)₂·6H₂O, CoSO₄, Co(SO₄)₂·7H₂O, or a combination thereof, but is not limited thereto.

The total number of moles of the cobalt compound may be 4.0 mol% or less, 0.3 mol% to 4.0 mol%, or 1.0 mol% to 3.0 mol% with respect to the number of moles of the lithium nickel-based oxide. If the content of the cobalt compound satisfies the above-described numerical range, a coating layer including an appropriate amount of cobalt is formed on the surface of the lithium nickel-based oxide particle, thereby suppressing a side reaction with an electrolyte solution, so that it is possible to improve the performance of a lithium secondary battery.

The cobalt compound may have a particle diameter of 1500 nm or less, 100 nm to 1000 nm, or 200 nm to 500 nm. If the particle diameter of the cobalt compound satisfies the above-described numerical range, coating uniformity decreases when the particle diameter of the cobalt compound is greater than 1500 nm, so that there is a limitation in improving high-temperature lifespan and high-temperature storage performance.

The secondary firing may be performed at a temperature of 660 °C to 740 °C, 680 °C to 720 °C, or 690 °C. The secondary firing may be performed for 4 hours to 12 hours, 6 hours to 12 hours, or 8 hours to 12 hours.

When the lithium nickel-based oxide is mixed with the cobalt compound and subjected to the secondary firing under the temperature and duration described above, if the secondary firing temperature is too high, a Co coating material excessively diffuses into a bulk, resulting in reducing the coating influence, and if the secondary firing temperature is too low, the uniformity of the coating layer decreases, so that it is possible to improve high-temperature lifespan properties by applying an appropriate secondary firing temperature.

A ratio of the content of the cobalt compound to the content of LiOH in the lithium nickel-based oxide formed by the primary firing is 2.00 mol%/wt% or greater, 2.50 mol%/wt% or greater, or 2.70 mol%/wt% to 3.50 mol%/wt%. The content Li₂CO₃ indicates the content of lithium in a form that has relatively low reactivity with the Co coating source, while the content of LiOH indicates the content of lithium in a form that has relatively high reactivity with the Co coating source. Therefore, in order to form a coating layer with high uniformity, the content of LiOH is more important than the content of Li₂CO₃, and if the Co coating content and LiOH ratio are limited within the above-described range, an appropriate Li-Co-O series coating layer may be formed.

A ratio of the content of the cobalt compound to BET of the lithium nickel-based oxide formed by the primary firing is 2.5 wt%/(m²/g) or greater, 3.0 wt%/(m²/g) to 10.0 wt%/(m²/g), or 4.0 wt%/(m²/g) to 6.0 wt%/(m²/g). If the BET is too high with respect to the Co coating content, a coating forming layer may not cover the entire surface area of a positive electrode, which may limit the improvement in high-temperature lifespan and performance during high-temperature storage, and if the BET is too low with respect to the Co coating content, an excessive coating layer may be formed with respect to the specific surface area, which may lead to poor initial resistance performance.

### Positive electrode

A positive electrode according to the present invention includes the above-described positive electrode active material of the present invention. Specifically, the positive electrode includes a positive electrode current collector, and a positive electrode active material layer formed on the positive electrode current collector, wherein the positive electrode active material layer includes the positive electrode active material according to the present invention. Since the positive electrode active material has been described above, a detailed description thereof will be omitted, and hereinafter, only the rest of the components will be described in detail.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, heat treatment carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the current collector to improve the adhesive force of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material and a binder together with the positive electrode active material.

In this case, the positive electrode active material may be included in a content of 80 wt% to 99 wt%, more specifically 90 wt% to 98 wt% with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, and more preferably 0.1 wt% to 5 wt% with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt%, based on the total weight of a positive electrode active material layer.

The positive electrode may be manufactured according to a typical method for manufacturing a positive electrode except that the positive electrode active material described above is used. Specifically, the positive electrode may be manufactured by applying a positive electrode slurry composition, which is prepared by dissolving or dispersing the positive electrode active material described above and selectively, if necessary, a binder, a conductive material, and a dispersant in a solvent, on a positive electrode current collector, followed by drying and roll-pressing.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

In addition, in another method, the positive electrode may also be manufactured by casting the positive electrode slurry composition on a separate support, and then laminating a film obtained by being peeled off from the support on a positive electrode current collector.

### Lithium secondary battery

Next, a lithium secondary battery according to the present invention will be described.

Specifically, the lithium secondary battery includes a positive electrode, a negative electrode positioned to face the positive electrode, a separator interposed between the positive electrode and the negative electrode, and an electrolyte, and since the positive electrode is the same as that described above, a detailed description thereof will be omitted, and hereinafter, only the rest of the components will be described in detail.

Also, the lithium secondary battery may selectively further include a battery case for accommodating an electrode assembly of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the current collector to improve the binding force of a negative electrode active material. For example, the negative electrode current collector may be used in various forms such as a film, a sheet, a foil, a net, a porous body, a foam, and a non-woven body.

The negative electrode active material layer selectively includes a binder and a conductive material, together with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic material alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiOβ(0 < β < 2), SnO₂, a vanadium oxide, and a lithium vanadium oxide; or a composite including the metallic material and the carbonaceous material such as an Si-C composite or an Sn-C composite, and any one thereof or a mixture of two or more thereof may be used. In addition, a metal lithium thin film may be used as the negative electrode active material. Also, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt% based on the total weight of the negative electrode active material layer.

The binder is a component for assisting in binding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of a negative electrode active material, and may be included in an amount of 1 wt% to 30 wt%, 1 wt% to 20 wt%, or 1 wt% to 10 wt% based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode active material layer may be prepared by applying a negative electrode slurry composition, which is prepared by dissolving or dispersing a negative electrode active material and selectively, a binder and a conductive material in a solvent, on a negative electrode current collector, followed by drying, or may be prepared by casting the negative electrode slurry composition on a separate support, and then laminating a film peeled off from the support on a negative electrode current collector.

Meanwhile, in the lithium secondary battery, the separator is to separate the negative electrode and the positive electrode and to provide a movement path for lithium ions, and any separator may be used without particular limitation as long as it is a separator commonly used in a lithium secondary battery, and particularly, a separator having low resistance to ion movement in an electrolyte and excellent moisture retention ability for an electrolyte solution is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, all of which may be used in the manufacturing of a lithium secondary battery, but the electrolyte is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a lithium secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. In this case, the additive may be included in 0.1 wt% to 10.0 wt% based on the total weight of the electrolyte.

As described above, a lithium secondary battery including the positive electrode active material according to the present invention stably exhibits excellent discharge capacity, output properties, and capacity retention rate, and thus, is useful in the field of portable devices such as mobile phones, laptop computers, digital cameras, etc., and in the field of electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source for one or more medium-to-large devices of a power tool, an electric car including an electric vehicle (EV), a hybrid electric vehicle, and a plug-in hybrid electric vehicle (PHEV), or a system for power storage.

Hereinafter, embodiments of the present invention will be described in detail so that those skilled in the art may easily carry out the present invention. However, the present invention may be embodied in many different forms, and is not limited to the embodiments set forth herein.

### Examples and Comparative Examples

### Example 1

A transition metal precursor having a molar ratio of Ni : Co : Mn of 96 : 1 : 3 and a lithium raw material (LiOH) were mixed such that the molar ratio of a transition metal (Ni+Co+Mn) : Li was to be 1 : 1.2, and then the mixture was subjected to primary firing at 870°C for 10 hours in a firing furnace, and milled to prepare a lithium nickel-based oxide LiNi_{0.96}Co_{0.01}Mn_{0.03}O₂ in the form of a single particle.

Thereafter, the fired product was mixed with 3 mol% of Co(OH)₂ and then subjected to secondary firing at 690 °C for 10 hours to prepare a positive electrode active material in the form of a single particle having a coating layer including cobalt (Co) on the surface thereof.

### Example 2 and Comparative Examples 1 to 7

The content and size of a cobalt compound applied during the preparation of positive electrode active material powder, and the secondary firing temperature in Example 2 and Comparative Examples 1 to 7 are shown in [Table 1] below.

Specifically, in the case of Comparative Example 1, there is a difference in that the rate of temperature decrease during the primary firing was reduced by 20% compared to Example 1, so that LiOH, which has good reactivity with the cobalt compound, was decreased, and Li₂CO₃ was increased in the content ratio of residual lithium after the primary firing. In the case of Comparative Example 2, there is a difference in that a cobalt compound having a larger particle diameter than the cobalt compound applied in Example 1 was used when preparing the positive electrode active material powder. In the case of Comparative Example 3, the secondary firing temperature is lowered compared to Example 1, so that the cobalt compound is pushed toward the surface, and therefore, is widely distributed on an extreme surface portion, but the uniformity decreases as a result. In the case of Comparative Example 5, there is a difference in that the pulverization strength after the primary firing was increased by 15% compared to Example 1 to increase the BET. This means that the specific surface area of the compound after the primary firing increases with respect to the input amount of the cobalt compound. In Comparative Example 6, the lithium (Li) input ratio during the primary firing was increased by 3% compared to Example 1 to intentionally increase the content of residual lithium after the primary firing. In the cases of Comparative Examples 6 and 7, the amount of residual lithium including LiOH after the primary firing is excessively large with respect to the input amount of the cobalt compound, thereby increasing the amount of residual lithium after coating, which results in increasing gas generation during high-temperature storage.

Positive electrode active material powder in the form of a single particle was prepared in the same manner as in Example 1, except for the above descriptions.

**[Table 1]**

| | Example 1 | Example 2 | Comparative Example 1 | ComparativeExample 2 | ComparativeExample 3 | ComparativeExample 4 | ComparativeExample 5 | ComparativeExample 6 | ComparativeExample 7 |
|---|---|---|---|---|---|---|---|---|---|
| Content of cobalt compound [mol%] | 3 | 2 | 2 | 2 | 2 | 2 | 2 | 2 | 3 |
| Particle diameter of cobalt compound [nm] | 400 | 400 | 400 | 3000 | 400 | 400 | 400 | 400 | 400 |
| Secondary firing temperature [°C] | 690 | 690 | 690 | 690 | 650 | 750 | 690 | 690 | 690 |

### Experimental Example 1

In each of Examples 1 and 2 and Comparative Examples 1 to 7, a lithium nickel-based oxide in the form of a single particle was collected after the primary firing, and the contents of LiOH and Li₂CO₃ on the surface of the lithium nickel-based oxide were measured. Specifically, the contents of LiOH and Li₂CO₃ on the surface of the lithium nickel-based oxide were measured by pH titration, and as a pH meter, a T5 manufactured by Mettler Toledo Company was used.

In addition, a lithium nickel-based oxide in the form of a single particle was collected after the primary firing to measure BET. Specifically, the BET of the lithium nickel-based oxide was measured by a BET method, and specifically, may be calculated from the adsorption amount of nitrogen gas under a liquid nitrogen temperature (77K) using a BELSORP-mino II manufactured by BEL Japan Co., Ltd.

The measurement results are shown in [Table 2] below.

Using the above-described measurement results, the ratio of the LiOH content to the Li₂CO₃ content after the primary firing, the sum of the LiOH content and the Li₂CO₃ content after the primary firing, the ratio of the cobalt compound content to the LiOH content after the primary firing, and the ratio of the cobalt compound content to the BET of the lithium nickel-based oxide after the primary firing were calculated. The calculation results are shown in [Table 2] below.

**[Table 2]**

| | Example 1 | Example 2 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Content of LiOH after primary firing [wt%] | 1.1 | 0.6 | 0.3 | 0.6 | 0.6 | 0.6 | 0.6 | 1.1 | 1.2 |
| Content of Li₂CO₃ after primary firing [wt%] | 0.5 | 0.3 | 0.6 | 0.3 | 0.3 | 0.3 | 0.3 | 0.5 | 0.7 |
| BET of lithium-nickel-based oxide after primary firing [m²/g] | 0.5 | 0.5 | 0.5 | 0.5 | 0.5 | 0.5 | 0.9 | 0.5 | 0.5 |
| Ratio of content of LiOH to content of Li₂CO₃ after primary firing | 2.2 | 2.0 | 0.5 | 2.0 | 2.0 | 2.0 | 2.0 | 2.2 | 1.7 |
| Sum of content of LiOH and content of Li₂CO₃ after primary firing [wt%] | 1.6 | 0.9 | 0.9 | 0.9 | 0.9 | 0.9 | 0.9 | 1.6 | 1.9 |
| Ratio of content of cobalt compound to content of LiOH after primary firing [mol%/wt%] | 2.73 | 3.33 | 6.67 | 3.33 | 3.33 | 3.33 | 3.33 | 1.82 | 2.50 |
| Ratio of content of cobalt compound to BET of lithium-nickel-based oxide after primary firing [wt%/(m²/g)] | 6.0 | 4.0 | 4.0 | 4.0 | 4.0 | 4.0 | 2.2 | 4.0 | 6.0 |

### Experimental Example 2: XPS analysis of positive electrode active material

Using X-ray photoelectron spectroscopy (XPS) (Nexsa G2 ESCA system, Thermo Fisher Scientific Co.), the ratio [unit: at%] of Co and Ni element contents on the surface of the positive electrode active material of each of Examples 1 and 2 and Comparative Examples 1 to 7 was measured. The atomic ratios of Co to Ni, XPS(Co/Ni), during the XPS analysis are shown in Table 3 below.

Specifically, the positive electrode active materials in the form of powder of Examples 1 and 2 and Comparative Examples 1 to 7 were sampled in a holder, and measured and data-processed under the following conditions.
- X-ray source: Monochromated Al Kα(1486.6 eV)
- X-ray spot size: 400 µm
- Operation mode: CAE(Constant Analyzer Energy) mode
- Survey scan: pass energy 200 eV, energy step 1 eV
- Narrow scan: scanned mode, pass energy 100 eV, energy step 0.1 eV
- Charge compensation: flood gun 1.5V, 150 µA
- SF: Al THERMO1
- ECF: TPP-2M
- BG subtraction: Shirley background

**[Table 3]**

| | XPS(Co/Ni) |
|---|---|
| Example 1 | 0.22 |
| Example 2 | 0.20 |
| Comparative Example 1 | 0.18 |
| Comparative Example 2 | 0.21 |
| Comparative Example 3 | 0.23 |
| Comparative Example 4 | 0.09 |
| Comparative Example 5 | 0.12 |
| Comparative Example 6 | 0.18 |
| Comparative Example 7 | 0.22 |

### Experimental Example 3: AES analysis of positive electrode active material- Standard deviation

Using a PHI 710 device manufactured by ULVAC-PHI Co., Auger electron spectroscopy (AES) was performed by spraying, thereby fixing the positive electrode active material powder of each of Examples 1 and 2 and Comparative Examples 1 to 7 onto an aluminum foil, loading the same into an AES chamber, followed by selecting three particles having a diameter of 3 µm to 5 µm to perform AEM mapping on the surface of each particle, thereby quantifying the standard deviation of Co/Ni of all pixels. In this case, the total number of pixels for one particle was greater than 10,000, and the intensity mapped for each element was converted into a quantitative value by reflecting a relative sensitivity factor (RSF) for each element, and then the mapping image was converted into Co/Ni in order to eliminate the influence of height.

Specifically, the measurement and data processing were performed under the following conditions. The results are shown in [Table 4] below.
- Electron energy analyzer: CMA (Cylindrical Mirror Analyzer)
- Electron Beam Energy: 10 kV
- Target Current: 1 nA

**[Table 4]**

| | Standard deviation of AES(Co/Ni) |
|---|---|
| Example 1 | 0.33 |
| Example 2 | 0.28 |
| Comparative Example 1 | 0.90 |
| Comparative Example 2 | 1.10 |
| Comparative Example 3 | 1.00 |
| Comparative Example 4 | 0.30 |
| Comparative Example 5 | 0.85 |
| Comparative Example 6 | 0.90 |
| Comparative Example 7 | 0.35 |

### Experimental Example 4: Measurement of content of residual lithium in positive electrode active material

The content of residual lithium of each of the positive electrode active materials of Examples 1 and 2 and Comparative Examples 1 to 7 was measured. The measurement results are shown in [Table 5] below.

The content of residual lithium present on the surface of the positive electrode active material was measured by pH titration, and as a pH meter, a T5 manufactured by Mettler Toledo Company was used. Specifically, 10 g of each of the positive electrode active material powder prepared in Examples 1 and 2 and Comparative Examples 1 to 7 was stirred in 100 mL of distilled water for 5 minutes, and then, pH titration was performed on the solution while applying a HCl solution having a concentration of 0.1 N thereto.

**[Table 5]**

| | Content of residual Li₂CO₃ [wt%] |
|---|---|
| Example 1 | 0.40 |
| Example 2 | 0.30 |
| Comparative Example 1 | 0.30 |
| Comparative Example 2 | 0.27 |
| Comparative Example 3 | 0.27 |
| Comparative Example 4 | 0.27 |
| Comparative Example 5 | 0.27 |
| Comparative Example 6 | 0.45 |
| Comparative Example 7 | 0.65 |

### Experimental Example 5: Evaluation of high-temperature lifespan properties and gas generation amount

High-temperature lifespan properties and gas generation amount were evaluated for lithium secondary battery half-cells manufactured as follows by respectively using the positive electrode active materials of Examples 1 and 2 and Comparative Examples 1 to 7.

### <Manufacturing of lithium secondary battery>

The positive electrode active material prepared in each of Examples 1 and 2 and Comparative Examples 1 to 7, a conductive material (carbon black), and a PVDF binder were mixed at a weight ratio of 95 : 2 : 3 in N-methylpyrrolidone to prepare a positive electrode slurry. The positive electrode slurry was applied on one surface of an aluminum current collector, dried at 130 °C, and then roll-pressed to manufacture a positive electrode.

A lithium metal was used as a negative electrode, and a separator was interposed between the positive electrode manufactured by the method described above and the negative electrode to manufacture an electrode assembly, and the electrode assembly was placed inside a battery case, and then an electrolyte solution was injected into the case to manufacture a battery cell. The electrolyte solution was prepared by dissolving LiPF₆ having a concentration of 0.6 M in a mixed organic solvent in which ethylene carbonate (EC) : dimethyl carbonate (DMC) : ethyl methyl carbonate (EMC) were mixed at a volume ratio of 1 : 2 : 1, and then adding 2 wt% of vinylene carbonate (VC) thereto.

Specifically, each of the lithium secondary battery half-cells was charged and discharged at 45 °C at 0.33 C in the voltage range of 2.5 V to 4.35 V, which was set to one cycle, and then subjected to 300 cycles of the charging and discharging to measure the capacity retention rate by using a cycler manufactured by PNE Co. The measurement results are shown in [Table 6] below.

In addition, each of the lithium secondary batteries manufactured above was charged to 4.25 V with 1 C in a CC-CV mode, and then the secondary battery was dissembled to separate the positive electrode. Then, 400 mg of the positive electrode and 15 µL of an electrolyte solution were put into a pouch-type battery case, and the battery case was sealed to manufacture a cell, and the cell was stored at 60 °C for 8 weeks to measure the change in cell volume (△Cell volume, unit: △mL/g) before and after the high-temperature storage. The cell volume change was measured by placing the cell in water and then measuring the volume change of the water. The measurement results are shown in [Table 6] below.

**[Table 6]**

| | Capacity retention ratio [%] | Gas generation amount [mL/g] |
|---|---|---|
| Example 1 | 92.5 | 0.16 |
| Example 2 | 92.6 | 0.17 |
| Comparative Example 1 | 89.5 | 0.75 |
| Comparative Example 2 | 87.5 | 0.75 |
| Comparative Example 3 | 88.6 | 0.72 |
| Comparative Example 4 | 88.9 | 0.80 |
| Comparative Example 5 | 87.8 | 0.78 |
| Comparative Example 6 | 88.8 | 0.85 |
| Comparative Example 7 | 91.5 | 0.79 |

From [Table 6] above, it can be confirmed that lithium secondary batteries respectively including the positive electrode active materials of Examples 1 and 2 have better high-temperature lifespan properties than the lithium secondary batteries respectively including the positive electrode active materials of Comparative Examples 1 to 7, and have an effect of reducing gas generation. Specifically, it can be confirmed that the lithium secondary batteries respectively including the positive electrode active materials of Comparative Examples 1 to 3 and 6, in which the XPS (Co/Ni) is 0.15 or greater, and the content of residual Li₂CO₃ in the final positive electrode active materials is 0.50 wt% or less, but the standard deviation of AES (Co/Ni) is greater than 0.8, have poorer high-temperature lifespan properties and higher gas generation than the lithium secondary batteries respectively including the positive electrode active materials of Examples 1 and 2. In addition, it can be confirmed that the lithium secondary battery including the positive electrode active material of Comparative Example 4, in which the standard deviation of AES (Co/Ni) is 0.8 or greater, and the content of residual Li₂CO₃ in the final positive electrode active material is 0.50 wt% or less, but the XPS (Co/Ni) is less than 0.15, has poorer high-temperature lifespan properties and higher gas generation than the lithium secondary batteries respectively including the positive electrode active materials of Examples 1 and 2.

In addition, it can be confirmed that the lithium secondary battery including the positive electrode active material of Comparative Example 5, in which the content of residual Li₂CO₃ in the final positive electrode active material satisfies 0.50 wt% or less, but the XPS (Co/Ni) is less than 0.15, and the standard deviation of AES (Co/Ni) is 0.8 or less, has poorer high-temperature lifespan properties and higher gas generation than the lithium secondary batteries respectively including the positive electrode active materials of Examples 1 and 2.

In addition, it can be confirmed that the lithium secondary battery including the positive electrode active material of Comparative Example 7, in which the XPS (Co/Ni) is 0.15 or greater, the standard deviation of AES (Co/Ni) satisfies 0.8 or less, but the content of residual Li₂CO₃ in the final positive electrode active material is greater than 0.50 wt%, has poorer high-temperature lifespan properties and higher gas generation than the lithium secondary batteries respectively including the positive electrode active materials of Examples 1 and 2.

## Claims

1. A positive electrode active material comprising: a lithium nickel-based oxide particle in the form of a single particle which is composed of one single nodule, or a pseudo-single particle which is a composite of 30 or fewer nodules; and a coating layer formed on a surface of the lithium nickel-based oxide particle and including cobalt,
wherein:
when the positive electrode active material is analyzed by X-ray photoelectron spectroscopy (XPS), XPS (Co/Ni), which is an atomic ratio of Co to Ni, is 0.15 or greater;
when the positive electrode active material is analyzed by Auger electron spectroscopy (AES), AES (Co/Ni), which is a standard deviation of the atomic ratio of Co to Ni, is 0.80 or less; and
the positive electrode active material has a content of residual Li₂CO₃ of 0.50 wt% or less.

2. The positive electrode active material of claim 1, wherein the lithium nickel-based oxide particle has a nickel content of 55 mol% or greater among all metals excluding lithium.

3. The positive electrode active material of claim 1, wherein the positive electrode active material has a D₅₀ of 2.0 µm to 10.0 µm.

4. The positive electrode active material of claim 1, wherein the average particle diameter of the nodules of the positive electrode active material is 1 µm to 10 µm.

5. The positive electrode active material of claim 1, wherein the positive electrode active material has a BET specific surface area of 0.2 m²/g to 1.5 m²/g.

6. The positive electrode active material of claim 1, wherein the coating layer further comprises one or more selected from the group consisting of Mg, Al, Ti, V, Cr, Mn, Zr, Nb, W, and B.

7. The positive electrode active material of claim 1, wherein the lithium nickel-based oxide has a composition represented by Formula 1 below:
[Formula 1] LiₐNi_{b}Co_{c}M¹_{d}M²ₑO₂
wherein in Formula 1 above, M¹ is at least one selected from the group consisting of Mn and Al, M² is at least one selected from the group consisting of Ba, Ca, Zr, Ti, Mg, Ta, Nb, and Mo, and 1.0≤a≤1.5, 0.8≤b≤1.0, 0≤c≤0.2, 0≤d≤0.2, and 0≤e≤0.2.

8. A method for preparing a positive electrode active material, the method comprising:
mixing a transition metal precursor including nickel, cobalt, and manganese with a lithium raw material and subjecting the mixture to primary firing to form a lithium nickel-based oxide in the form of a single particle which is composed of one single nodule, or a pseudo-single particle which is a composite of 30 or fewer nodules; and
mixing the lithium nickel-based oxide with a cobalt compound and subjecting the mixture to secondary firing to form a positive electrode active material including a coating layer which includes cobalt,
wherein the lithium nickel-based oxide formed by the primary firing includes Li₂CO₃ and LiOH, wherein a ratio of the content of LiOH to the content of Li₂CO₃ is 1.4 or greater, and the cobalt compound has a particle diameter of 1500 nm or less.

9. The method of claim 8, wherein the lithium nickel-based oxide formed by the primary firing has a sum of the content of LiOH and the content of Li₂CO₃ of 0.5 wt% to 2.2 wt%.

10. The method of claim 8, wherein a ratio of the content of the cobalt compound to the content of LiOH in the lithium nickel-based oxide formed by the primary firing is 2.00 mol%/wt% or greater.

11. The method of claim 8, wherein a ratio of the content of the cobalt compound to BET of the lithium nickel-based oxide formed by the primary firing is 2.5 wt%/(m²/g) or greater.

12. The method of claim 8, wherein the secondary firing is performed at a temperature of 660 °C to 740 °C.

13. A positive electrode comprising the positive electrode active material according to any one claim of claims 1 to 7.

14. A lithium secondary battery comprising the positive electrode of claim 13.
